# EUROPEAN PATENT APPLICATION

(11) **EP 2 090 610 A1**
(43) Date of publication of application: **19.08.2009**
(21) Application number: 07831417.6
(22) Date of filing: 08.11.2007
(51) Int. Cl.: C08G 85/00, C09J 167/00, C09J 171/00, C09J 175/04, C09J 177/00, C09J 201/02

(54) **OXETANE-CONTAINING RESIN, AND ADHESIVE AGENT AND RESIST AGENT EACH USING THE SAME**

(30) Priority: 29.11.2006 JP 2006321089; 12.12.2006 JP 2006334182; 31.05.2007 JP 2007144589
(71) Applicant: Toyo Boseki Kabushiki Kaisha, Osaka-shi, Osaka 530-8230 (JP)
(72) Inventor: YATSUKA, Takeshi, Otsu-shi Shiga 520-0292 (JP); SHIMENO, Katsuya, Otsu-shi Shiga 520-0292 (JP); HATTORI, Takahiro, Otsu-shi Shiga 520-0292 (JP); NANBARA, Shintaro, Otsu-shi Shiga 520-0292 (JP); NAGATA, Shoko, Otsu-shi Shiga 520-0292 (JP); HOTTA, Yasunari, Otsu-shi Shiga 520-0292 (JP)
(74) Representative: Vossius & Partner
(86) International application number: PCT/JP2007/071686
(87) International publication number: WO 2008/068996

(57) **Abstract**

[Object] To provide a thermosetting resin used for the manufacture of layered products for fibrous use, electrical products and automobile parts or, particularly, used for multilayered circuit board and flat cables, being suitable for a latent thermosetting adhesive which shows, upon adhesion, the fluidity necessary for the adhesion but quickly hardens by heat or light and also being excellent in resistance to heat upon soldering; to provide a resin expressing an excellent flame-retarding property in spite of non-use of halogen, and expressing latent hardening properties to quickly harden by heat and light; and to provide an adhesive and a resist agent comprising the same.

[Constitution] An oxetane-containing resin which is **characterized in** having a number-average molecular weight of not less than 2,000, having one or more bonding group (s) selected from ester bond, urethane bond, amide bond and ether bond in its main chain and containing 100 to 10,000 equivalents/ton of oxetane group, 300 to 5, 000 equivalents/ton of carboxyl group, not less than 0.1% by weight of phosphorus atom and 100 to 2,000 equivalents/ton of ethylenic unsaturated double bond in a molecule in a molecule. An adhesive and a resist agent obtained from the same.

## Description

### Technical Field of the Invention

The present invention relates to an oxetane-containing resin having excellent adhesive property, hardening property and flame retarding property and to an adhesive or a resist agent using the same where said resin exhibits both thermosetting property and pot life for a long period.

### Background Art

A filmy adhesive has been used in various uses and particularly in an adhesive use for circuit boards. For those uses, there are an adhesive for cover film of FPC (flexible printed circuit), a bonding sheet used for adhesion of FPC with hard substrate or adhesion of FPCs each other and an adhesive for flat cables and there is an expanding demand therefor. For example, in recent years, flat cables have been frequently used in view of weight reduction and redaction in cost of wiring parts of home electrical appliances and automobile parts. There are many cases where the adhesive for flat cables comprises a three-layered structure of a plastic film layer such as PET, vinyl chloride or polyimide, adhesive and metal foil such as copper. Thus, an adhesive is demanded to have adhesive property to both plastic film and metal foil and, at the same time, durability of the adhesive is demanded. When used by bending for long time or used in a folded part, mechanical characteristic such as a considerably high resistance to bending/folding is necessary but, as to the adhesives which have been proposed up to now, they are usable to fulfill those demanded characteristic which is being developed.
Further, in recent years, flame-retardant materials have been demanded in various fields. For example, in office automation appliances and house electrical appliances, it is necessary that, if polymer materials are ignited by abnormal heating due to malfunctioning of the parts thereof, that should not be a cause for fire and a quick self-fire-extinguishing is important. Under such circumstances, it is necessary that not only the molding material is made flame retarding but also an adhesive used therefor is made flame retarding in order to give higher flame-retarding materials.

In the adhesives which are made flame retarding, prescriptions for making flame retarding where halogen atom is introduced into a skeleton or a halogen-type flame retardant and antimony trioxide, etc. are jointly used have been well known.
But, in a certain circle, there is a fear that environment is polluted upon burning the flame retardants and a measure to decrease the using amount of the halogen-type flame retardant has been conducted. In Europe for example, there is a movement in attaching an ecological label to the products.

In general, as to a flame-retarding art using no halogen with low toxicity and low smoking, a method where a phosphorus type flame retardant such as phosphate may be exemplified but, in order to achieve a high flame-retarding property, it is necessary to use large amount of such a flame retardant. In that case, there may be the cases where not only the use characteristics such as adhesive property and mechanical characteristic lower but also the flame retardant itself is bled out whereby the adhesive property lowers with a lapse of time.

On the other hand, in FPC and printed circuit board, liquid or filmy solder resist agent is usually used for protection of circuit or for prevention of adhesion of solder upon actual installment. As to the solder resist, a film type of a developing mode where pattern is formed by a photolithographic method is expanding its demand due to its high precision.
As to the resist agent as such, there has been demanded an adhesive where reaction does not happen by heating upon evaporation of a solvent or during the storing period and, although fluidity necessary for adhesion is achieved upon adhesion, hardening quickly proceeds by heat or light. Particularly, a latent thermosetting adhesive which drastically changes from thermoplastic to thermosetting when the temperature is higher than a predetermined one has been put to practical use using an epoxy resin. However, when the epoxy resin is a main ingredient, there are problems in practical use such as that the resulting hardened product has an inferior flexibility, preservation at low temperature or circulation at low temperature is necessary and a hardening treatment at high temperature for long time is needed.

As to the filmy adhesive as such, there has been demanded an adhesive where reaction does not happen upon processing into a film or during the storing period and, although fluidity necessary for adhesion is achieved upon adhesion, hardening quickly proceeds by heat or light. Particularly, a latent thermosetting adhesive which drastically changes from thermoplastic to thermosetting when the temperature is higher than a predetermined one has been put to practical use using an epoxy resin. However, when the epoxy resin is a main ingredient, there are problems in practical use such as that the resulting hardened product has an inferior flexibility, preservation at low temperature or circulation at low temperature is necessary and a hardening treatment at high temperature for long time is needed.

In recent years, development of oxetane compounds to photo- and thermosetting materials has been investigated (please see references [5]-[8]). In those references, there is a description that oxetane which is a four-membered ring cyclic ether is able to be used as a hardening agent which does not react at the temperature of about 100°C but starts its reaction at the temperature of higher than 150°C. However, the examples mentioned therein are examples of composition where oxetane compounds are used as a hardening agent and, since properties are greatly dependent on the compounding ratio, a precise compounding is demanded. Further, because of the use of low-molecular compounds, there is a problem such as that the oxetane compound is oozed out to stain the thing to be adhered or is accumulated on the interface between the adhesive agent and the thing to be adhered causing the lowering of adhesive force upon heating during the adhesion. Still further, the oxetane compound used here has a disadvantage of lowering the flame retarding property even when a flame retarding resin is used as a resin which is a main ingredient.

### (References)

[1] Japanese Patent Application Laid-Open (JP-A) No. 128195/78 (Claims)
[2] Japanese Patent Application Laid-Open (JP-A) No. 150352/88 (Claims)
[3] Japanese Patent Application Laid-Open (JP-A) No. 2002-3810 (Claims)
[4] Japanese Patent Application Laid-Open (JP-A) No. 235480/97 (Claims)
[5] Japanese Patent Application Laid-Open (JP-A) No. 2005-307101 (Claims)
[6] Japanese Patent Application Laid-Open (JP-A) No. 2004-168921 (Claims)
[7] WO 01/073510 (Claims)
[8] Journal of Network Polymer, Japan, Vol.27, 38-44 (2006) Disclosure of the Invention

### Problem that the Invention is to Solve

An object of the present invention is, with regard to an adhesive used for the manufacture of layered products for fibrous use, electrical products and automobile parts or, particularly, with regard to an adhesive used for multilayered circuit board and flat cables, to provide an oxetane-containing resin being suitable for a latent thermosetting adhesive which shows, upon adhesion, the fluidity necessary for the adhesion but quickly hardens by heat or light and also being excellent in resistance to heat upon soldering. Another object of the present invention is, with regard to an adhesive or a resist agent used for adhesion of layered product of film, metal or fiber as automobile parts and electrical products or, particularly for circuit board, to provide an oxetane-containing resin expressing latent hardening properties which achieves an excellent flame-retarding property in spite of non-use of halogen, does not react during the storage period of an adhesive, shows fluidity necessary for adhesion upon the adhesion and quickly hardens by heat and light.

### Means for Solving the Problem

The present inventors have carried out intensive studies for a hardening reaction mechanism of the resin and achieved the present invention. Thus, the present invention relates to the following oxetane-containing resin and to an adhesive and a resist agent using the same.
(1) An oxetane-containing resin which is characterized in having a number-average molecular weight of not less than 2,000, having one or more bonding group (s) selected from ester bond, urethane bond, amide bond and ether bond in its main chain and containing 100 to 30,000 equivalents/ton of oxetane group and 300 to 5,000 equivalents/ton of carboxyl group in a molecule.
(2) An oxetane-containing resin which is characterized in having a number-average molecular weight of not less than 2,000, having one or more bonding group (s) selected from ester bond, urethane bond, amide bond and ether bond in its main chain and containing 100 to 30,000 equivalents/ton of oxetane group and not less than 0.1% by weight of phosphorus atom in a molecule.
(3) The oxetane-containing resin according to the above (2) which further contains 300 to 5,000 equivalents/ton of carboxyl group in a molecule.
(4) An oxetane-containing resin which is characterized in having a number-average molecular weight of not less than 2,000, having one or more bonding group (s) selected from ester bond, urethane bond, amide bond and ether bond in its main chain and containing 100 to 5,000 equivalents/ton of oxetane group, 300 to 5,000 equivalents/ton of carboxyl group and 100 to 2,000 equivalents/ton of ethylenic unsaturated double bond in a molecule.
(5) The oxetane-containing resin according to the above (4) which further contains not less than 0.1% by weight of phosphorus atom in a molecule.
(6) The oxetane-containing resin according to any one of the above (1) to (5) which is **characterized in that** the oxetane-containing resin is selected from polyester resin, polyurethane resin, polyamide resin and polyether resin or a copolymerized resin comprising one or more of these resins.
(7) An adhesive using the oxetane-containing resin according to any one of the above (1) to (6).
(8) A resist agent using the oxetane-containing resin according to any one of the above (1) to (6).

### Advantages of the Invention

In accordance with the present invention, it is now possible to provide a latent thermosetting adhesive which gives a hardened product having a high cross-lanking density when used as an adhesive or a resist agent for the parts in office automation appliances and home electrical appliances whereby heat resistance, adhesive property to metal and preservability are excellent. It is also possible in accordance with the present invention that a flame-retarding resin which is not only excellent in flame retarding property but also useful as an adhesive where reaction does not happen upon processing into a film or during the storing period and, although fluidity necessary for adhesion is achieved upon adhesion, hardening quickly proceeds by heat or light when used as an adhesive or a resist agent. Further, since the present invention is able to provide an adhesive and a resist agent showing a good latent hardening property where adhesive property to various films and metals, heat resistance to soldering, durability for a long period, etc. are good whereby the present invention greatly contributes in industry.

### Best Mode for Carrying Out the Invention

The oxetane-containing resin of the present invention contains 100 to 10,000 equivalents of oxetane group, and 300 to 5,000 equivalents of carboxyl group or not less than 0.1% by weight of phosphorus atom per a ton of resin. It is not preferred if the content of the oxetane group is less than this range since cross-linking property becomes bad. Further, when the range is more than that, manufacture of the resin in a stable manner becomes difficult or dissolving in common solvents is not achieved. Incidentally, the ratio of oxetane group to carboxyl group is within a range of from 1:3 to 1:0.1 or, preferably, from 1:2 to 1:0.5. When the ratio is outside said range, cross-linking property becomes bad.
Further, the side chain may contain 100 to 2,000 equivalents/ton of ethylenic unsaturated double bond and, when the double bond concentration is less than said range, photosetting property is insufficient while, when it is more than that, gelling may happen during the storage.

A method for introducing an oxetane group into the resin includes a method where an oxetane compound containing hydroxyl group or halogen such as 3-hydroxymethyloxetane, 3-ethyl-3-hydroxymethyloxetane, 3,3-bis(hydroxymethyl)-oxetane, di[1-hydroxymethyl(3-oxetanyl)]methyl ether, 3-chloromethyloxetane or 3,3-bis(chloromethyl)oxetane is utilized and introduced into a molecule or to a terminal via ester bond, urethane bond, amide bond or ether bond.

A specific method will be exemplified below using 3,3-bis(hydroxymethyl)oxetane (BHO).
(1) A hydroxyl-terminated resin is made to react with a tetracarboxylic acid dianhydride and BHO in an organic solvent;
(2) A hydroxyl-terminated resin is made to react with a diisocyanate compound and BHO in an organic solvent;
(3) A hydroxyl-terminated resin or glycol is made to react with a dibasic acid and BHO in the presence of a catalyst for a low-temperature esterifying reaction such as scandium triflate;
(4) A hydroxyl-terminated resin is made to react with a dibasic acid chloride and BHO in an organic solvent; and
(5) A diamine compound is made to react with a dibasic acid chloride and BHO in an organic solvent.
When a halogen-containing compound such as 3,3-bis(chloromethyl) oxetane is used, there are a method where 3,3-bis(chloromethyl) oxetane is made to react with a bisphenol compound such as bisphenol A in the presence of a phase-transfer catalyst such as triethylbenzylammonium chloride, and a method where 3,3-bis(chloromethyl)oxetane is made to react with potassium salt of a dicarboxylic acid, etc.

Although those reactions may be carried out in an organic solvent or in a fused state, it is necessary to carry out at the temperature where no oxetane ring opens. An organic solvent where boiling point is not higher than 160°C is preferred in view of homogenization of reaction temperature, prevention of abnormally high temperature and restriction in drying temperature upon formation of film for adhesion. Examples of the specific solvent include an ether solvent such as tetrahydrofuran or 1,3-dioxolane, an aromatic solvent such as toluene or xylene, an ester solvent such as ethyl acetate or propyl acetate and a ketone solvent such as methyl ethyl ketone or cyclohexanone. Mixture of these solvents may be used.

Examples of a method for introducing a carboxylic acid into the resin include a method where phthalic acid anhydride or trimellitic acid anhydride is added to the hydroxyl-terminated resin and a method where a hydroxyl-terminated resin is extended by a tetracarboxylic acid dianhydride such as pyromellitic acid anhydride and benzophenone tetracarboxylic acid dianhydride. There is also a method where a chain extension and a carboxylic acid introduction are carried out at the same time using a dimethylolpropionic acid or dimethylolbutanoic acid with a diisocyanate compound.
Examples of a method for the introduction of an ethylenic unsaturated double bond into the resin include a reaction of an unsaturated compound having a hydroxyl group such as hydroxyalkyl (meth)acrylate with an isocyanate compound, a reaction of glycidyl (meth)acrylate with a carboxylic acid in the resin and a reaction of a hydroxyl group in the resin terminal with an unsaturated polybasic acid anhydride such as maleic acid anhydride and it is preferred to utilize the reaction of a glycidyl group-containing (meth)acrylate compound with a carboxylic acid group introduced into the resin.
By making the concentration of the ethylenic unsaturated double bond introduced into the side chain of the oxetane-containing resin of the present invention not less than 800 equivalents/ton to and segmenting the ethylenic unsaturated double bond, a photosetting is possible even when the adding amount of the photosetting monomer is reduced or when it is not added. As to a means for the segmentation, a method where a long-chain segment is introduced as a material for the resin so that the ethylenic unsaturated group is localized is effective.

The oxetane-containing resin of the present invention is **characterized in that** it is a resin selected from polyester resin, polyurethane resin, polyamide resin and polyether resin or a copolymerized resin comprising one or more of these resins. In the present invention, a product where the bond formed upon polymerization of monomer or oligomer is an ester bond, a urethane bond, an amide bond or an ether bond is called polyester resin, polyurethane resin, polyamide resin or polyether resin, respectively.
Incidentally, the oxetane-containing resin of the present invention may be a copolymerized resin where two or more of an ester bond, a urethane bond, an amide bond and an ether bond are utilized as the bond formed upon polymerization. A number-average molecular weight of the oxetane-containing resin of the present invention is not less than 3,000, preferably, not less than 5,000, and more preferably, not less than 8,000. When it is less than 3,000, the resin becomes fragile and that is not preferred since not only the handling is inconvenient but also the heat resistance of the resulting set product is inferior.

In the oxetane-containing resin of the present invention, it is also possible that a monomer containing a phosphorus atom is introduced by means of copolymerization or denaturation so that the molecular chain (including a side chain) contains a phosphorus atom whereby flame retarding property without halogen is imparted. Amount of the phosphorus atom contained therein is not less than 0.1% by weight, preferably, not less than 0.5% by weight, more preferably, not less than 1.0% by weight, and the most preferably, 2.0% by weight of the weight of the resin. There is no particular limitation for its upper limit. When the amount of the phosphorus atom contained therein is less than 0.1% by weight, a flame retarding property is low and, even when a flame retardant is used together, a flame retarding property is hardly available.
As an example thereof, the case where phosphorus is introduced into polyester will be mentioned below. As to a method for introducing the phosphorus atom into the polyester, a method where a phosphorus-containing carboxylic acid represented by the following formula (1) or (2) or an esterified product thereof is used as a copolymerizing component is usually preferred in view of economy etc. Besides the compound represented by the above formula, it is also possible to use an alkyl bis(3-hydroxypropyl)phosphine oxide, an alkyl bis(3-hydroxycarbonylethyl)phosphine oxide, etc. (in all of them, the alkyl is methyl, ethyl, propyl, butyl, etc.).

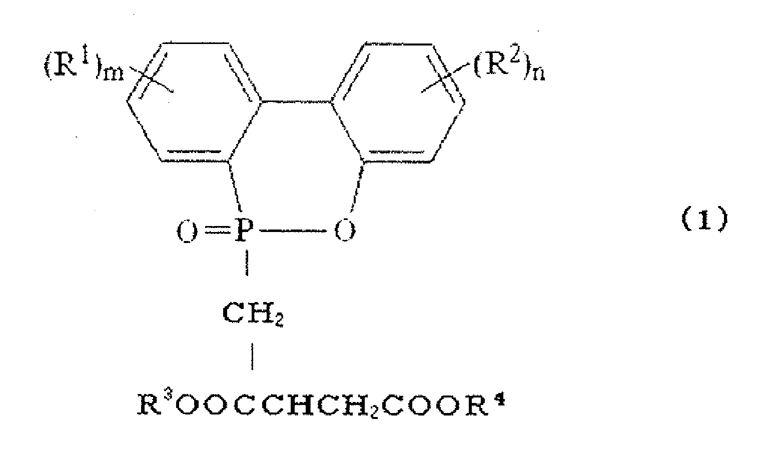

, wherein, R¹, R²: hydrogen atom or hydrocarbon group;
R³, R⁴: hydrogen atom, hydrocarbon group or hydroxyl group-substituted hydrocarbon group; and
m, n: integer of 0 to 4.

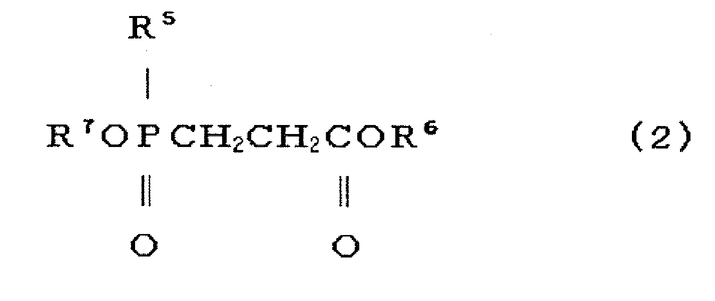

,wherein R⁵: hydrogen atom or hydrocarbon group; and
R⁶ , R⁷: hydrogen atom, hydrocarbon group or hydroxyl group-substituted hydrocarbon group.

The oxetane-containing resin of the present invention may be used together with a flame retardant. Examples of the flame retardant include a phosphorus-type flame retardant such as triphenyl phosphate, tricresyl phosphate, trixylenyl phosphate, triethyl phosphate, cresyl diphenyl phosphate, xylenyl diphenyl phosphate, cresyl bis(2,6-xylenyl) phosphate, 2-ethylhexyl phosphate, dimethyl methyl phosphate, resorcinol bis(diphenyl) phosphate, bisphenol A bis (diphenyl) phosphate, bisphenol A bis (dicresyl) phosphate, diethyl N,N-bis(2-hydroxyethyl)aminomethyl phosphate, phosphoric acid amide, organic phosphine oxide or red phosphorus; a nitrogen-type flame retardant such as ammonium polyphosphate, phosphazene, cyclophosphazene, triazine, melamine cyanurate, succinoguanamine, ethylenedimelamine, triguanamine, triazinyl cyanurate, melem, melam, tris(β-cyanoethyl) isocyanurate, acetoguanamine, guanylmelamine sulfate, melem sulfate or melam sulfate; a metal salt type flame retardant such as potassium diphenylsulfone-3-sulfonate, aromatic sulfonimide metal salt or alkali metal polystyrenesulfonate; a hydrated metal type flame retardant such as aluminium hydroxide, magnesium hydroxide, dolomite, hydrotalcite, barium hydroxide, magnesium basic carbonate, zirconium hydroxide or tin hydroxide; and an inorganic flame retardant such as silica, aluminium oxide, iron oxide, titanium oxide, manganese oxide, magnesium oxide, zirconium oxide, zinc oxide, molybdenum oxide, cobalt oxide, bismuth oxide, chromium oxide, tin oxide, antimony oxide, nickel oxide, copper oxide, tungsten oxide, zinc borate, zinc metaborate, barium metaborate, zinc carbonate, magnesium carbonate, calcium carbonate, barium carbonate or zinc stagnate; and a silicon type flame retardant such as silicone powder.

A reaction catalyst for reacting oxetane group with carboxyl group may be added to the oxetane-containing resin of the present invention. Examples of the specific reaction catalyst include a quaternary onium salt such as tetraphenylphosphonium chloride, tetraphenylphosphonium bromide or tetrabutylammonium bromide. If necessary, it is also possible to use a hardening agent such as epoxy resin, acid anhydride or isocyanate compound and a hardening catalyst such as that of a tin type or an amine type.

It is also possible that various kinds of additives are added to the oxetane-containing resin of the present invention to use as an adhesive or a resist agent. In addiction to the above-shown flame retardants, examples of the additives include a reactive monomer such as carbitol (meth)acrylate, phenoxyethyl (meth)acrylate, trimethylolpropane tri(meth)acrylate, pentaerythritol tetra(meth)acrylate or tris(hydroxyethyl) isocyanurate tri(meth)acrylate. Besides them, there is a polymerization inhibitor such as hydroquinone, hydroquinone monomethyl ether or catechol which is added for prevention of gelling during polymerization or storage. There is also a polymerization initiator such as a photoradical polymerization initiator which generates a radical by irradiation of active energy ray or a thermoradical polymerization initiator which generates a radical by heat. As to the photoradical polymerization initiator, one of or a combination of two or more of acetophenone, 2,2-dimethoxy-2-phenylacetophenone, 2-methyl-1-[4-(methyl-thio)phenyl]-2-morpholinopropan-1-one, benzoin, benzoin methyl ether, benzyl methylketal, 2,4-diethylthioxanthone and 2-mercaptobenzoxazole may be exemplified. As to the thermoradical polymerization initiator, benzoyl peroxide, methyl ethyl ketone peroxide, dicumyl peroxide, 2,2'-azobisisobutyronitrile, 1,1'-azobis(1-acetoxy-1-phenylethane and 1'-azobis-1-cyclohexanecarbonitrile may be exemplified.

It is desirable that an antifoaming agent of a silicon type or a non-silicon type such as acrylic or paraffin type for imparting an antifoaming property or a fluidity adjusting agent such as silica or calcium carbonate for imparting a thixotropic property is added to a liquid resist agent using the oxetane-containing resin of the present invention. Besides the above, a crystal nucleus agent such as talc, mica, polyethylene or various metal salt, a coloring pigment, an inorganic or organic filler, and a tackiness enhancing agent, etc. may be exemplified.

If necessary, the adhesive prepared from the oxetane-containing resin may use a hardening agent such as epoxy resin, acid anhydride or isocyanate compound or a hardening catalyst such as that of a tin type or an amine type.
It is also possible that the oxetane-containing resin of the present invention is mixed with various kinds of additives to use as an adhesive or a coating agent. In addiction to the above-shown flame retardants, examples of the additives include a crystal nucleus agent such as talc, mica, polyethylene or various metal salt, a coloring pigment, an inorganic or organic filler, a tackiness enhancing agent, etc.

When the oxetane-containing resin of the present invention is dissolved in an organic solvent and applied on a plastic film or a metal foil followed by drying, it is possible to prepare a film equipped with an adhesive or a metal foil equipped with an adhesive. It is also possible to release the adhesive from a plastic film for using it as a filmy adhesive. Thickness of the dried film is preferred to be 200 µm to 3 µm. More preferably, to be not more than 100 µm, further preferably, not more than 70 µm, and still further preferably, not more than 10 µm.

As to a plastic film, there may be used any plastic film such as polyester film (hereinafter, it is also called PET film), polyamide film, polycarbonate film, polypropylene film, polystyrene film, polyimide film, polyamide film or polyoxabenzazol film and, in view of economy and multiple use, polyester film is preferred. If necessary, a plastic film may be subjected to a corona treatment or installed with an easily adhesive layer or a releasing layer.

When the plastic film applied with the oxetane-containing resin of the present invention prepared as such is layered with other material or with a plastic film followed by heating, pressing and adhering, a layered product is able to be constituted. As to the other material as such, metal is preferred and, when used as electric circuit parts or electric circuit, copper foil or copper wire is preferred. An adhesive containing the thermosetting resin of the present invention exhibits an excellent adhesive property to PET film and copper foil and, further, shows an excellent resistant to flexing and, therefore, when it is used as an adhesive for electric circuit parts or, particularly, flat cable being used at the same time, the outcome is quite advantageous. Examples

The present invention will now be further specifically illustrated by using the following Examples although the present invention is not limited thereto. The measured values mentioned in the Examples are measured as follows.
(1) Composition: The oxetane-containing resin is dissolved in heavy chloroform and subjected to a quantitative determination by means of ¹H-NMR.
(2) Number-average molecular weight: A value calculated as polystyrene is determined by means of a gel permeation chromatography using tetrahydrofuran as a solvent.
(3) Amount of phosphorus atom: (Quantitative determination of phosphorus by a wet degradation and a colorimetric method using molybdenum blue)
A sample is weighed depending upon the phosphorus concentration in the sample and placed in an Erlenmeyer flask, 3 ml of sulfuric acid, 0.5 ml of perchloric acid and 3.5 ml of nitric acid are added thereto and the mixture is gradually decomposed by heating during a half day using an electric heater. When the solution becomes transparent, it is further heated so that white smoke of sulfuric acid is generated and allowed to stand to cool down to room temperature, the resulting decomposed solution is transferred to a 50-ml volumetric flask, 5 ml of a 2% ammonium molybdate solution and 2 ml of a 0.2% hydrazine sulfate solution are added thereto, the volume of the mixture is made up with pure water and the content is well mixed. The flask is dipped in boiling water for ten minutes to heat and colorize, cooled with water down to room temperature and deaerated using ultrasonic wave, the resulting solution is placed in a 10-mm absorption cell and absorbance is measured by a spectrophotometer (wavelength: 830 nm) using a blank test solution as a control. Amount of phosphorus is determined from a calibration curve previously prepared and the concentration of P in the sample is calculated.

(4) Oxygen index: The resin prepared in the Example or the Comparative Example is evaluated in terms of a limit oxygen index (L.O.I.) of the resin in accordance with an oxygen index method (JIS K 7201). This is the minimum oxygen concentration necessary for burning the sample. The more the oxygen index, the higher the flame retarding property.
(5) Evaluation of flame retarding property of the hardened coat: The resin composition solution (100 parts by weight) prepared in the Example or the Comparative Example is applied onto a biaxially elongated polypropylene film so as to make the thickness after drying 50 µm and then subjected to drying and heating treatment at 100°C for 30 minutes. The resulting coat is released from the polypropylene film, placed on a Teflon film and subjected to a hardening treatment by heating at 180°C for 30 minutes. This hardened film is evaluated by making into a test piece of 125 mm length × 12.5 mm width in accordance with the subject No. 94 (UL 94) standardized by Underwriters Laboratory (UL) of the United States. A flame retarding level lowers in the order of V-0 > V-1 > V-2 > HB.

(6) Developing Property: After being exposed to light via a negative film, it was subjected to a spray developing using a 1 wt% aqueous solution of sodium carbonate, subjected to a predetermined thermal treatment and judged by naked eye using a microscope.
   ○ : Developed even to the fine areas;
   Δ : Considerable parts still undeveloped;
   × : Hardly developed
(7) Resistance to Soldering Heat: The sample subjected to photosetting, developing and thermal treatment is dipped in a solder bath of 300°C for 30 seconds and the changes in appearance are checked.
   ○ : No change noted;
   Δ : Swollen and released although they are not more than 20%;
   × : Swelling and releasing are noted in more than 20%
The present invention will now be specifically illustrated by using the following Examples. In the Examples, the term described as simply "parts" refers to the parts by weight.

### Example 1

A hydroxyl-terminated polyester resin (A) where molecular weight was 4,000 (100 parts), 33 parts of benzophenone tetracarboxylic acid dianhydride, 10 parts of 3,3-bis(hydroxymethyl)oxetane (BHO), 0.2 part of 4-dimethylaminopyridine as a reaction catalyst and 143 parts of 1,3-dioxolane as a solvent were added into a reactor equipped with stirrer, thermometer and cooler for flowing-out and dissolving and reaction of the resin were carried out at 60°C for 10 hours. A part of the resulting solution was dried *in vacuo* at 50°C to give a resin for analysts. Result of the measurement for the resin is shown in Table 1.
The resulting solution was applied to a biaxially elongated polypropylene film so as to make the thickness after drying 25 µm and dried with hot air at 100°C for 10 minutes. The adhesive was released from the film, sandwiched between 18-µm electrolyzed copper foils and adhered by pressing at 150°C for 30 minutes with the pressure of 5 kg/cm². Release strength was measured at room temperature (20°C) and at 100°C. The adhered piece was dipped in a solder bath of 300°C for 1 minute and the changes in appearance thereby were observed. The same evaluation was conducted after the adhered film was allowed to stand at 40°C for one week. Result of the evaluation is shown in Table 1.

### Example 2

Hydroxyl-terminated polyester resin (A) where molecular weight was 4,000 (100 parts), 22 parts of benzophenone tetracarboxylic acid dianhydride, 10 parts of di[1-hydroxymethyl(3-oxetanyl)]methyl ether, 0.2 part of 4-dimethylaminopyridine as a reaction catalyst and 132 parts of 1,3-dioxolane as a solvent were added to the same reactor as in Example 1 and dissolving and reaction of the resin were conducted at 60°C for 10 hours. Evaluation of the resin and evaluation of the adhesive force were conducted in the same manner as in Example 1. Result is shown in Table 1.

### Examples 3 to 5

Resin was polymerized in the same manner as in Example 1 using the materials mentioned in Table 1. Evaluation was conducted in the same manner as in Example 1. Result is shown in Table 1.

### Examples 6 and 7

Bisphenol A type epoxy resin "YD 8125" manufactured by Toto Kasei was added to the solution prepared in Example 1. Evaluation was conducted in the same manner as in Example 1. Result is shown in Table 1.

### Comparative Examples 1 to 6

Reaction was carried out for the composition mentioned in Table 1 in the same reactor as in Example 1 to give a resin solution. Evaluation was conducted in the same manner as in Example 1. Result is shown in Table 1. In Comparative Examples 1 and 2, BHO was added to a reaction product of the polyester (A) with benzophenone tetracarboxylic acid dianhydride. In Comparative Examples 3 and 4, the polyester (A), benzophenone tetracarboxylic acid dianhydride and BHO which were mixed immediately before use at a room temperature were used. In Comparative Examples 5 and 6, oxetane group concentration or carboxylic acid concentration was outside the scope of the present invention.

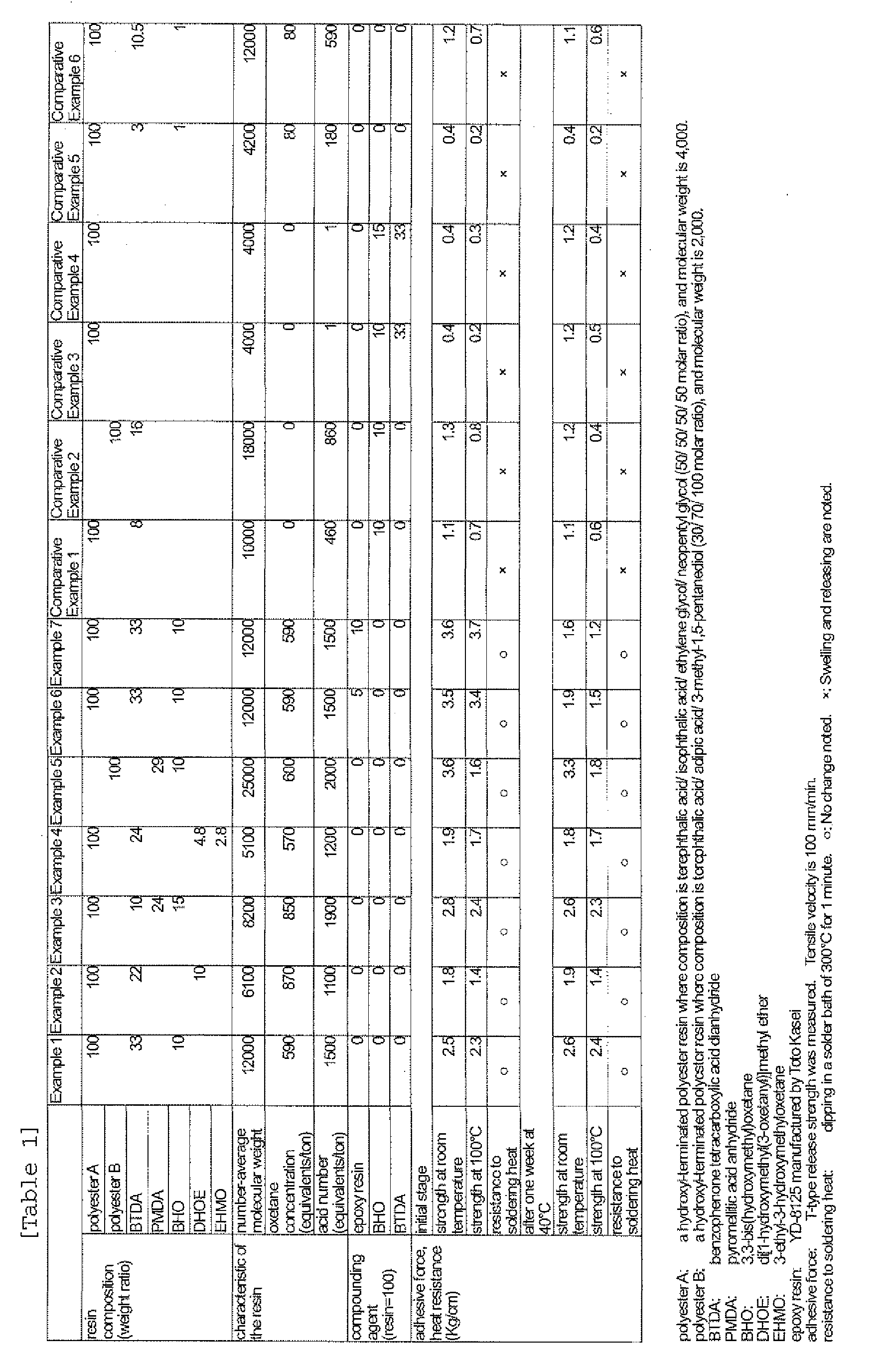

### Example 8

Previously dried polyester resin (C) (100 parts), 15 parts of dimethylolbutanoic acid and 15 parts of BHO were dissolved in 100 parts of methyl ethyl ketone at 50°C. To this solution was added 55 parts of diphenylmethane diisocyanate (MDI) followed by being made to react at 60°C for 15 hours. Characteristic of the resulting polyurethane resin and the adhesive property evaluated by the same manner as in Example 1 are shown in Table 2.

### Examples 9 and 10

The materials mentioned in Table 2 were used and, by the same manner as in Example 8, polyurethane resin containing oxetane group and carboxyl group was prepared. Result of the evaluation is shown in Table 2.

### Comparative Examples 7 and 8

The materials mentioned in Table 2 were used to prepare polyurethane resin. Evaluation was conducted in the same manner as in Example 1. Result is shown in Table 2. In Comparative Examples 7 and 8, oxetane group concentration or carboxylic acid concentration was outside the scope of the present invention.

### Example 11

3,3-Bis(chloromethyl)oxetane (15. 5 parts), 18.2 parts of bisphenol A, 30.5 parts of triethylbenzylammonium chloride and 80 parts of dimethyl sulfoxide (DMSO) as a reaction solvent were dissolved in the same reactor as in Example 1. To this solution was added an aqueous solution where 5.4 parts of sodium hydroxide was dissolved in 30 parts of water and the mixture was heated at 70°C for 3 hours. Dipotassium trimesate (5.7 parts) was further added thereto and heating was continued for 5 hours. The reaction solution was poured over 300 parts of methanol and the polymer was filtered, washed with hot water and with methanol and dried.
According to an NMR analysis, the resulting resin was a polyether ester resin. Result of the evaluation is shown in Table 2.

**[Table 2]**

| resin | kind of resin | Example 8 | Example 9 | Example 10 | Example 11 | Comparative Example 7 | Comparative Example 8 |
|---|---|---|---|---|---|---|---|
| | | polyurethane | polyurethane | polyurethane | polyether ester | polyurethane | polyurethane |
| resin material (weight ratio) | polyester C | 100 | | 50 | | 100 | |
| | polyhexamethylene carbonate | | 100 | 50 | | | 100 |
| | BHO | 15 | 20 | 20 | | 1 | 15 |
| | dimethylolbutanoic acid | 15 | 30 | 20 | | 15 | 3 |
| | BCMO | | | | 15.5 | | |
| | bisphenol A | | | | 18.2 | | |
| | trimesic acid | | | | 5.7 | | |
| | MDI | 58 | 100 | 82 | | 31 | 49 |
| characteristic of the resin | number-average molecular weight | 28000 | 35000 | 31000 | 4600 | 31000 | 36000 |
| | oxetane concentration (equivalents/ton) | 680 | 670 | 760 | 2900 | 60 | 760 |
| | acid number (equivalents/ton) | 540 | 810 | 610 | 500 | 700 | 120 |
| adhesive force, heat resistance (Kg/cm) | initial stage | | | | | | |
| | strength at room temperature | 3.5 | 4.3 | 4.1 | 1.9 | 1.2 | 1.1 |
| | strength at 100°C | 4.1 | 3.1 | 4.3 | 2.4 | 2.1 | 0.5 |
| | resistance to soldering heat | ○ | ○ | ○ | ○ | × | × |
| | after one week at 40°C | | | | | | |
| | strength at room temperature | 3.2 | 4.2 | 4.3 | 2.1 | 1.1 | 1.1 |
| | strength at 100°C | 3.9 | 3.2 | | 2.3 | 2.1 | 0.4 |
| | resistance to soldering heat | ○ | ○ | ○ | ○ | × | × |

| | | | | | | | |
|---|---|---|---|---|---|---|---|
| polyester C: a hydroxyl-terminated polyester resin where composition is terephthalic acid/ isophthalic acid/ 2-methyl-1,3-propanediol (75/ 25/ 100 molar ratio), and molecular weight is 5,000. polyhexamethylene carbonate: CD220 manufactured by Daicel Chemical BHO: 3,3-bis(hydroxymethyl)oxetane BCMO: 3,3-bis(chloromethyl)oxetane MDI: diphenylmethane diisocyanate adhesive force: T-type release strength was measured. Tensile velocity is 100 mm/min. resistance to soldering heat: dipping in a solder bath of 300°C for 1 minute. ○: No change noted. ×: Swelling and releasing are noted. | | | | | | | |

### Example 12

A hydroxyl-terminated phosphorus-containing polyester resin (a) which was copolymerized with a phosphorus compound represented by the following formula (3) (hereinafter, it may be referred to as a phosphorus compound 3) where molecular weight was 5,000 (100 parts), 60 parts of benzophenone tetracarboxylic acid dianhydride, 20 parts of 3,3-bis(hydroxymethyl)oxetane (BHO), 0.2 part of 4-dimethylaminopyridine as a reaction catalyst and 180 parts of 1, 3-dioxolane as a solvent were added into a reactor equipped with stirrer, thermometer and cooler for flowing-out and dissolving and reaction of the resin were carried out at 60°C for 10 hours. A part of the resulting solution was dried *in vacuo* at 50°C to give a resin A for analysis. The resulting resin A was a polyester resin having oxetane group and carboxyl group. Result of the measurement is shown in Table 3.
The resulting solution was applied to a biaxially elongated polypropylene film so as to make the thickness after drying 25 µm and dried with hot air at 100°C for 10 minutes. The adhesive was released from the film, sandwiched between 18-µm electrolyzed copper foils and adhered by pressing at 150°C for 30 minutes with the pressure of 5 kg/cm². Release strength was measured at room temperature (20°C) and at 100°C. The adhered piece was dipped in a solder bath of 300°C for 1 minute and the changes in appearance thereby were observed. After the adhered film was allowed to stand at 40°C for one week, the film was sandwiched similarly between electrolyzed copper foils and adhered by pressing at 150°C for 30 minutes with the pressure of 5 kg/cm², and then release strength was measured at room temperature (20°C) and at 100°C, and the adhered piece was dipped in a solder bath of 300°C for 1 minute and the changes in appearance thereby were observed. Result of the evaluation is shown in Table 3.
Further, a flame retarding property of the hardened coat was evaluated. Result is shown in Table 3.

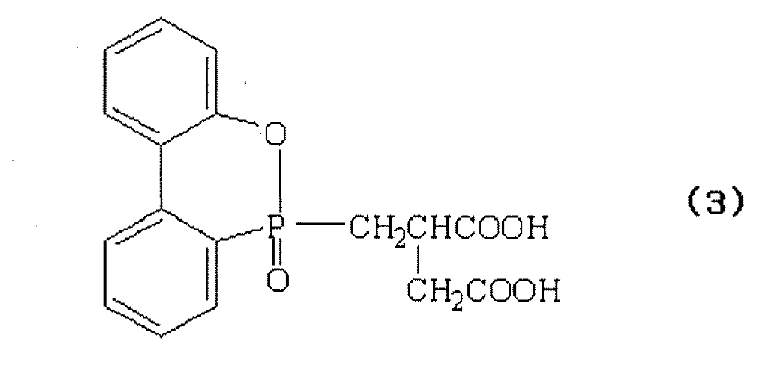

### Examples 13 to 15

The materials mentioned in Table 3 were used to polymerize each of the resins B, C and D in the same manner as in Example 12. Evaluation was conducted in the same manner as in Example 12. Result is shown in Table 3. In Example 13, 100 parts of the polyester a and 30 parts of BHO were firstly made to react with 40 parts of diphenylmethane diisocyanate (MDI) at 60°C for 10 hours, then 30 parts of benzophenone tetracarboxylic acid dianhydride and 0.2 part of 4-dimethylaminopyridine as a reaction catalyst were added thereto and the reaction was further conducted at 60°C for 10 hours to give resin B. In Examples 14 and 15, the ratio of the polyester a to the phosphorus-free polyester b was changed to give resin C and resin D, respectively.

### Comparative Examples 9 to 12

The materials mentioned in Table 3 were used to polymerize each of the resins J, K and L in the same manner as in Example 12. Evaluation was conducted in the same manner as in Example 12. Result is shown in Table 3. In Comparative Example 9, neopentyl glycol having no oxetane group was used instead of BHO. In Comparative Examples 10 and 11, a bisoxetane compound was added to the resin K prepared in Comparative Example 9 and adhesive test and flame retarding evaluation were conducted. In Comparative Example 12, oxetane group concentration was outside the scope of the present invention.

**[Table 3]**

| | | Example 12 | Example 13 | Example 14 | Example 15 | Comparative Example 9 | Comparative Example 10 | Comparative Example 11 | Comparative Example 12 |
|---|---|---|---|---|---|---|---|---|---|
| resin number | | resin A | resin B | resin C | resin D | resins K | resin K | resin K | resin L |
| resin composition (weight ratio) | polyester a | 100 | 100 | 50 | 10 | 100 | 100 | 100 | 100 |
| | polyester b | | | 50 | 90 | | | | |
| | BTDA | 60 | 30 | 60 | 60 | 60 | 60 | 60 | 65 |
| | BHO | 20 | 30 | 20 | 20 | | | | 2 |
| | MDI | | 40 | | | | | | |
| | NPG | | | | | 18 | 18 | 18 | 18 |
| characteristic of the resin | number-average molecular weight | 14000 | 31000 | 12000 | 14000 | 12000 | 12000 | 12000 | 15000 |
| | oxetane concentration (equivalents/ton) | 940 | 1200 | 940 | 940 | 0 | C | 0 | 90 |
| | acid number (equivalents/ton) | 2100 | 940 | 2100 | 2100 | 2100 | 2100 | 2100 | 2200 |
| | oxygen index | 33 | 31 | 29 | 27 | 33 | 33 | 33 | 33 |
| | phosphorus concentration (% by weight) | 1.8 | 1.7 | 0.9 | 0.2 | 1,9 | 1.9 | 1.9 | 1.8 |
| adhesive layer composition and compounding agent (resin=100) | resin | 100 (resign A) | 100 (resign B) | 100 (resign C) | 100 (resign D) | 100 (resign K) | 100 (resign K) | 100 (resign K) | 100 (resign L) |
| | bisoxetane | | | | | | 10 | 20 | |
| | melamine | | | 15 | 15 | | | | |
| a flame retarding property of the hardened coat | | V-0 | V-0 | V-0 | V-1 | V-0 | V-1 | V-2 | V-0 |
| adhesive force, heat resistance (Kg/cm) | initial stage | | | | | | | | |
| | strength at room temperature | 1.7 | 2.2 | 1.5 | 1.4 | 1.4 | 1.3 | 1.2 | 1.1 |
| | strength at 100°C | 1.2 | 1.7 | 1.1 | 1.1 | 0.2 | 0.7 | 0.5 | 0.6 |
| | resistance to soldering heat | ○ | ○ | ○ | ○ | × | × | ○ | × |
| | after one week at 40°C | | | | | | | | |
| | strength at room temperature | 1.6 | 2.1 | 1.3 | 1.3 | 1.3 | 1.2 | 1.1 | 1.1 |
| | strength at 100°C | 1.3 | 1.8 | 1.1 | 1.1 | 0.2 | 0.6 | 0.4 | 0.5 |
| | resistance to soldering heat | ○ | ○ | ○ | ○ | × | × | × | × |

| | | | | | | | | | |
|---|---|---|---|---|---|---|---|---|---|
| polyester a: terephthalic acid/ isophthalic acid/ phosphorus compound 3/ 2-methyl-1,3-propylene glycol (35/ 35/ 30/ 100 molar ratio), molecular weight 5,000, phosphorus concentration 3.3% polyester b: terephthalic acid/ isophthalic acid/ adipic acid/ 2-methyl-1,3-propylene glycol (40/ 35/ 25/ 100 molar ratio), molecular weight 5,000, phosphorus-free phosphorus compound 3: equimolar adduct of 9,10-dihydro-9-oxa-10-phosphenanthrene-10-oxide and itaconic acid, formula (3) BTDA: benzophenone tetracarboxylic acid dianhydride BHO: 3,3-bis(hydroxymethyl)oxetane MDI: diphenylmethane diisocyanate NPG: neopentyl glycol bisoxetane: bis(3-ethyl-3-oxetanylmethyl)ether | | | | | | | | | |

### Example 16

A previously dried phosphorus-containing compound represented by the following formula (4) (hereinafter, it may be referred to as a phosphorus compound 4) (100 parts), 25 parts of BHO and 20 parts of dimethylolbutanoic acid were dissolved in 200 parts of 1,3-dioxolane at 50°C. To this solution was added 148 parts of diphenylmethane diisocyanate (MDI) followed by being made to react at 50°C for 15 hours to give a resin E. The resulting resin E was a polyurethane resin, and its characteristic and adhesive property evaluated by the same manner as in Example 12 are shown in Table 4.

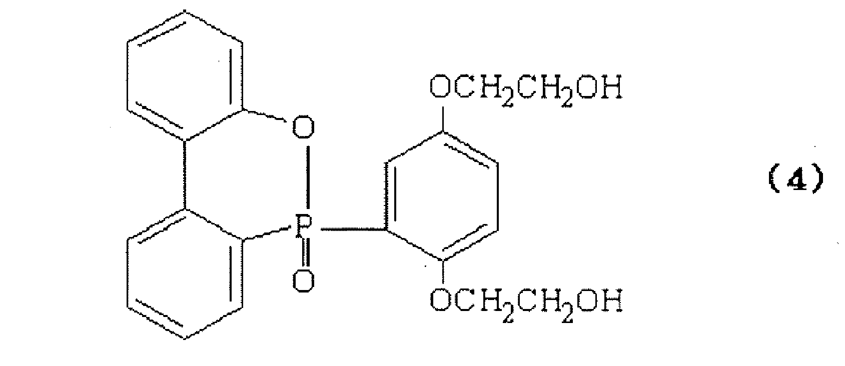

### Example 17

The same operation as in Example 16 was conducted except that a polyester resin c solution was added to the solution prepared in Example 16 whereupon the evaluation was conducted in the same manner as in Example 12. Result is shown in Table 4.

### Examples 18 and 19

The materials mentioned in Table 4 were used and the same operation as in Example 16 was conducted to give each of resin F and resin G which were polyurethane resin. Evaluation was conducted in the same manner as in Example 16. Result is shown in Table 4.

### Example 20

A solution where 100 parts of a previously dried phosphorus compound represented by the following formula (5) (hereinafter, it may be referred to as a phosphorus compound 5) was dissolved in 100 parts of dimethyl sulfoxide was added to a solution comprising 50 parts of 3,3-bis(chloromethyl)oxetane, an aqueous solution of sodium hydroxide (where 25.8 parts of sodium hydroxide was dissolved in 50 parts of water), 50 parts of toluene and 148 parts of benzyltriethylammonium chloride. After the above was made to react at 70°C for 5 hours, it was poured over 500 parts acidic ethanol. The resin separated out therefrom was filtered, dried and dissolved in 1,3-dioxolane to give resin H. The resulting resin H was a polyether resin and its characteristic and adhesive property evaluated by the joint use with the polyester resin c solution by the same manner as in Example 6 were shown in Table 4.

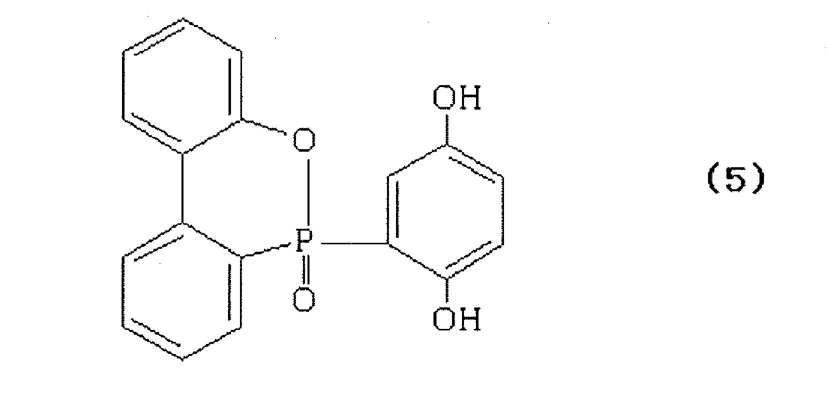

### Example 21

A phosphorus compound 3 (100 parts) represented by the above formula (3) and 80 parts of dimethylacetamide were dissolved in 41 parts of 3,3-bis(chloromethyl)oxetane. Into this solution was dropped 53 parts of triethylamine during 1 hour. After the reaction for 10 hours at 80°C, the above was poured over 800 parts of water and the phosphorus-containing polyester resin separated out therefrom was filtered. The resulting resin was washed with water, dried and dissolved in 1,3-dioxolane to give a resin I. The resulting resin I was a polyester resin and its characteristic and adhesive property evaluated by the joint use with the polyester resin c solution by the same manner as in Example 17 were shown in Table 4.

**[Table 4]**

| | | Examples 16 | Example 17 | Example 18 | Example 19 | Example 20 | Example 21 |
|---|---|---|---|---|---|---|---|
| resin number | | resin E | resin E | resin F | resin G | resin H | resin I |
| resin composition (weight ratio) | polyester b | | | 100 | 100 | | |
| | phosphorus compound 3 | | | | | | 100 |
| | phosphorus compound 4 | 100 | 100 | 10 | 10 | | |
| | phosphorus compound 5 | | | | | 100 | |
| | BHO | 25 | 25 | 10 | 10 | | |
| | MDI | 140 | 140 | | 48 | | |
| | DMBA | 20 | 20 | 31 | 10 | | |
| | 3,3-bis(chloromethyl)oxetane | | | | | 50 | 41 |
| characteristic of the resin | number-average molecular weight | 8700 | 8700 | 25000 | 18000 | 2100 | 5300 |
| | oxetane concentration (equivalents/ton) | 740 | 740 | 560 | 470 | 2300 | 2200 |
| | acid number (equivalents/ton) | 470 | 470 | 0 | 370 | 0 | 380 |
| | oxygen index | 38 | 38 | 28 | 28 | 57 | 52 |
| | phosphorus concentration (% by weight) | 2.6 | 2.6 | 0.5 | 0.4 | 7.6 | 7.1 |
| adhesive layer composition and compounding agent (resin=100) | resin | 100 (resign E) | 100 (resign E) | 100 (resign F) | 100 (resign G) | 100 (resign H) | 100 (resign I) |
| | polyester c | | 30 | 30 | 30 | 50 | 50 |
| | melamine | | | 15 | 15 | | |
| a flame retarding property of the hardened coat | | V-0 | V-0 | V-1 | V-1 | V-0 | V-0 |
| adhesive force, heat resistance (Kg/cm) | initial stage | | | | | | |
| | strength at room temperature | 1.1 | 1.5 | 1.8 | 1.6 | 1.5 | 1.7 |
| | strength at 100°C | 0.8 | 0.9 | 1.4 | 1.1 | 1.2 | 1.3 |
| | resistance to soldering heat | ○ | ○ | ○ | ○ | ○ | ○ |
| | after one week at 40°C | | | | | | |
| | strength at room temperature | 1.2 | 1.6 | 1.7 | 1.5 | 1.4 | 1.6 |
| | strength at 100°C | 0.8 | 1 | 1.4 | 1.1 | 1.2 | 1.3 |
| | resistance to soldering heat | ○ | ○ | ○ | ○ | ○ | ○ |

| | | | | | | | |
|---|---|---|---|---|---|---|---|
| polyester b: terephthalic acid/ isophthalic acid/ adipic acid/ 2-methyl-1 ,3-propylene glycol (40/ 35/ 25/ 100 molar ratio), molecular weight 5,000, phosphorus-free polyester c: trimellitic acid anhydride/ isophthalic acid/ adipic acid/ 2-methyl-1,3-propylene glycol (20/ 4t31 40/ 100 molar ratio), molecular weight 1,200, acid number 2,300 equivalents/ton, phosphorus-free phosphorus compound 3: equimolar adduct of 9,10-dihydro-9-oxa-10-phosphenanthrene-10-oxide and itaconic acid, formula (3) phosphorus compound 4: 2-(9,10-dihydro-9-oxa-10-phosphenanthrene-10-oxide)-1,4-bis(2-hydroxyethoxy)phenylene, formula (4) phosphorus compound 5: 2-(9,10-dihydro-9-oxa-10-phosphenanthrene-10-oxide)-1,4-hydroquinone, formula (5) BHO: 3,3-bis(hydroxymethyl)oxetane MDI: diphenylmethane diisocyanate DMBA: dimethylolbutanoic acid | | | | | | | |

### Example 22

A hydroxyl-terminated phosphorus-containing polyester resin (A) (100 parts) which was prepared by copolymerization of the phosphorus compound represented by the above formula (3) followed by drying, 20 parts of 3,3-bis (hydroxymethyl) oxetane (BHO) and 100 parts of 1,3-dioxolane as a solvent were added into a reactor equipped with stirrer, thermometer and cooler for flowing out whereupon the resin was dissolved. To this solution were added 82 parts of benzophenone tetracarboxylic acid dianhydride and 0.5 part of 4-dimethylaminopyridine as a reaction catalyst followed by being made to react at 60°C for 10 hours. To this solution were further added 13 parts of glycidyl methacrylate, 0.01 part of methylhydroquinone as a polymerization inhibitor and 0.5 part of triphenylphosphine as a reaction catalyst and the mixture was heated at 60°C for further 5 hours. A part of the resulting solution was dried *in vacuo* at 50°C to give a resin for analysis. The resulting resin was a polyester resin having oxetane group, carboxyl group and double bond. Result of the measurement is shown in Table 5.

To the resulting solution was added 1 part of "Irgacure 907" manufactured by Ciba Speciality Chemical and the mixture was applied to a biaxially elongated polypropylene film so as to make the thickness after drying 25 µm and dried with hot air at 120°C for 10 minutes. After releasing the adhesive from the film, it was sandwiched between a 18-µm electrolyzed copper foil and a Teflon film which was a releasing film and adhered *in vacuo* at 120°C for 10 minutes with a pressure of 5 kg/cm². After the Teflon film was released, a negative mask was contacted to the dried coat, exposure to UV ray was conducted with a light dose of 500 mJ/cm² and the non-exposed area was removed by means of a spray developing for 90 seconds using a 1 wt% aqueous solution of sodium carbonate. A heating treatment was conducted at 180°C for 30 minutes. Developing property, adhesive property and solder heat resistance of the resulting pattern were tested. Result of the evaluation is shown in Table 5. Further, a dry film prepared on the biaxially elongated polypropylene film was stored at 40°C for two weeks, adhered to a copper foil in the same manner and the treatments of exposing to light, developing and heating were conducted. Result of the evaluation is shown in Table 5.

### Examples 23 to 26

Resin was polymerized in the same manner as in Example 22 using the materials mentioned in Table 5. Evaluation was conducted in the same manner as in Example 22. Result is shown in Table 5. In Example 23, polyester A, BHC and 2-methyl-1,3-pentanediol (2MG) were made to react with benzophenone tetracarboxylic acid dianhydride. Instead of the polyester A used in Example 23, polyhexamethylene carbonate diol (PCD-1000) of a number-average molecular weight of 1,000 was used in Example 24, polyhexamethylene carbonate diol (PCD-5000) of a number-average molecular weight of 5,000 was used in Examples 25 and 26 and, in Examples 24, 25 and 26, pyromellitic acid anhydride (PMDA) was used instead of BTDA in Example 22. In Examples 25 and 26, 2MG used in Example 23 was used. Incidentally, in Example 26, an isocyanate-terminated prepolymer was firstly polymerized from PDC-5000 and diphenylmethane diisocyanate (MDI), then BHO and 2MG were added so that the isocyanate group was made to react and, after that, polymerization was conducted using PMDA.

### Comparative Examples 13 to 15

Resin was polymerized in the same manner as in Example 22 using the materials mentioned in Table 5. In Comparative Examples 13 and 14 however, although no oxetane group was contained in the resin, a bisoxetane compound was compounded. In Comparative Example 15, although no oxetane group was contained similarly to Comparative Examples 13 and 14, an epoxy resin was compounded. Evaluation was conducted in the same manner as in Example 22. Result is shown in Table 5.

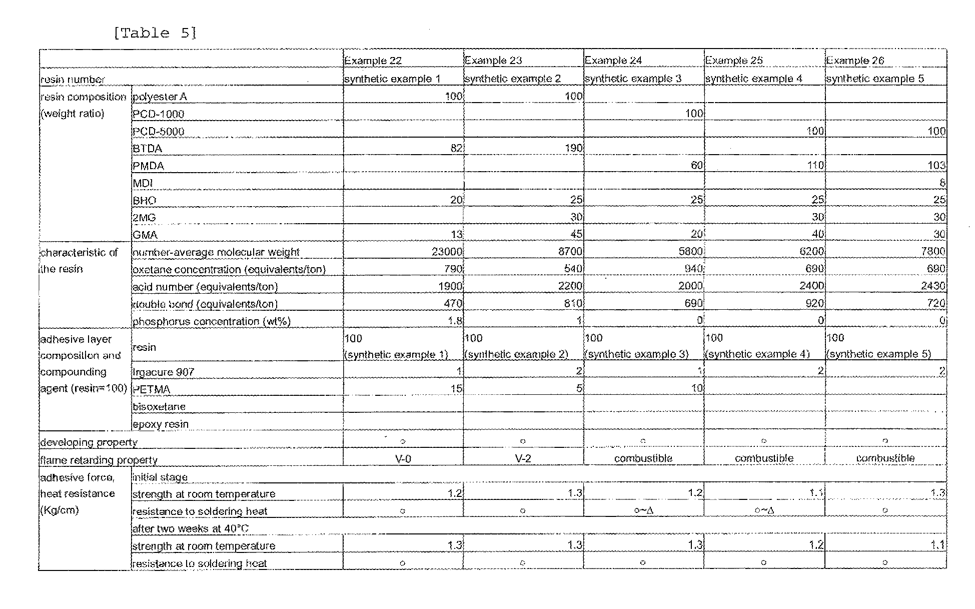

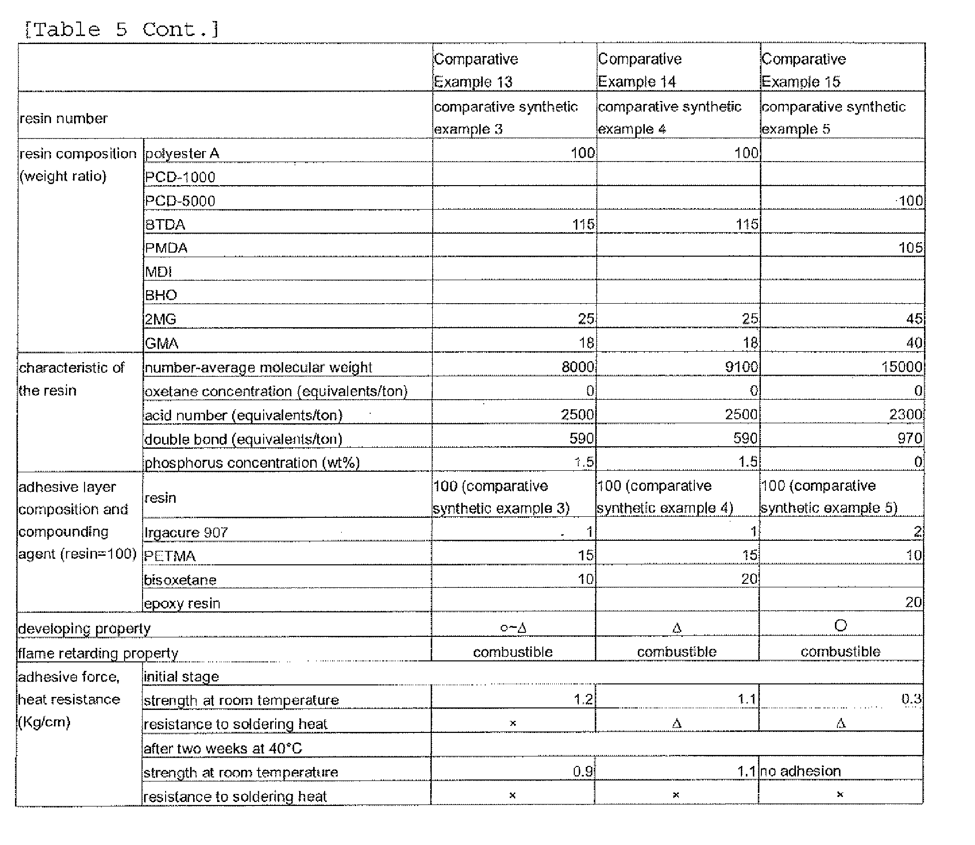

In Table 5,
polyester A: terephthalic acid/ isophthalic acid/ phosphorus compound 3 (formula 3) / 2-methyl-1,3-propylene glycol (35/ 30/35/ 100 molar ratio), molecular weight 1,000, phosphorus concentration 3.9%
PCD-1000: polyhexamethylene polycarbonate, number-average molecular weight 1,000
PCD-5000: polyhexamethylene polycarbonate, number-average molecular weight 5,000
BTDA: benzophenone tetracarboxylic acid dianhydride
PMDA: pyromellitic acid anhydride
MDI: diphenylmethane diisocyanate
BHO: 3,3-bis(hydroxymethyl)oxetane
2MG: 2-methyl-1,3-propylene glycol
GMA: glycidyl methacrylate
Irgacure 907: photo polymerization initiator manufactured by Ciba Speciality Chemical
PETMA: pentaerythritol tetraacrylate
bisoxetane: bis(3-ethyl-3-oxetanylmethyl)ether
epoxy resin: "YD-8125" manufactured by Toto Kasei

As will be apparent from Table 5, it is noted that Comparative Examples 13 to 15 were inferior in solder heat resistance as compared with the Examples. Since the hardening proceeded by an epoxy resin in Comparative Example 15, adhesion to copper foil in the initial stage was bad and, after being allowed to stand at 40°C for two weeks, thermoplastic property was completely lost.

### Industrial Applicability

The oxetane-containing resin of the present invention is suitable as a latent thermosetting adhesive which shows, upon adhesion, the fluidity necessary for adhesion but quickly hardens by heat or light, exhibits an adhesive property to metal and an excellent adhesive property even under the atmosphere of high temperature and, further, shows an excellent storing property and, therefore, it is able to be widely utilized as an adhesive used for the manufacture of layered products for fibrous use, electrical products and automobile parts, particularly, as an adhesive used for multilayered circuit board and flat cables, or as an adhesive and a resist agent which satisfy both thermosetting property and pot life for long time.

## Claims

1. An oxetane-containing resin which is **characterized in** having a number-average molecular weight of not less than 2,000, having one or more bonding group (s) selected from ester bond, urethane bond, amide bond and ether bond in its main chain and containing 100 to 30,000 equivalents/ton of oxetane group and 300 to 5,000 equivalents/ton of carboxyl group in a molecule.

2. An oxetane-containing resin which is **characterized in** having a number-average molecular weight of not less than 2,000, having one or more bonding group(s) selected from ester bond, urethane bond, amide bond and ether bond in its main chain and containing 100 to 30,000 equivalents/ton of oxetane group and not less than 0.1% by weight of phosphorus atom in a molecule.

3. The oxetane-containing resin according to claim 2 which further contains 300 to 5,000 equivalents/ton of carboxyl group in a molecule.

4. An oxetane-containing resin which is **characterized in** having a number-average molecular weight of not less than 2, 000, having one or more bonding group (s) selected from ester bond, urethane bond, amide bond and ether bond in its main chain and containing 100 to 30,000 equivalents/ton of oxetane group, 300 to 5, 000 equivalents/ton of carboxyl group and 100 to 2,000 equivalents/ton of ethylenic unsaturated double bond in a molecule.

5. The oxetane-containing resin according to claim 4 which further contains not less than 0.1% by weight of phosphorus atom in a molecule.

6. The oxetane-containing resin according to any one of claims 1 to 5 which is **characterized in that** the resin is selected from polyester resin, polyurethane resin, polyamide resin and polyether resin or a copolymerized resin comprising one or more of these resins.

7. An adhesive using the oxetane-containing resin according to any one of claims 1 to 6.

8. A resist agent using the oxetane-containing resin according to any one of claims 1 to 6.
